# EUROPEAN PATENT SPECIFICATION

(11) **EP 3 056 421 B1**
(45) Date of publication and mention of the grant of the patent: **17.04.2019**
(21) Application number: 14890456.8
(22) Date of filing: 06.06.2014
(51) Int. Cl.: B62M 6/50, B62M 6/55

(54) **ELECTRIC BICYCLE CENTRAL AXLE TORQUE SPEED SENSE DEVICE**
VORRICHTUNG ZUR ERFASSUNG DER DREHZAHL DER MITTELACHSE EINES ELEKTROFAHRRADS
DISPOSITIF DE DÉTECTION DE VITESSE DE COUPLE D'AXE CENTRAL POUR VÉLO ÉLECTRIQUE

(30) Priority: 22.04.2014 CN 201410163214
(43) Date of publication of application: 17.08.2016
(73) Proprietor: Bafang Electric (Suzhou) Co., Ltd., Jiangsu Province 215122 (CN)
(72) Inventor: WANG, Qinghua, Suzhou Jiangsu 215000 (CN); DING, Jun, Suzhou Jiangsu 215000 (CN); ZUO, Benyou, Suzhou Jiangsu 215000 (CN)
(74) Representative: Gulde & Partner
(86) International application number: PCT/CN2014/079330
(87) International publication number: WO 2015/161545

(56) References cited:
- WO-A1-2012/025314
- CN-A- 101 973 357
- CN-A- 103 171 733
- CN-A- 103 661 762
- CN-U- 203 274 988
- CN-U- 203 497 121
- CN-U- 203 806 093
- CN-Y- 201 177 539

## Description

### FIELD OF THE INVENTION

The present invention relates to a part of an electric bike, specifically to an electric-bike central-axle torque speed sensing device.

### BACKGROUND OF THE INVENTION

An electric bike, because of its characteristics such as lightweight, energy saving and free of pollution, is increasingly used in our country. In a traditional electric bike, the speed is adjusted with a handle, i.e. controlling the output power of the motor with the handle. However, currently more and more electric bikes mainly use a torque sensor to convert the foot pedal force into a corresponding voltage signal, which is outputted to control the operation power of the motor after being amplified by a motor control circuit board, thus significantly saving energy.

Sensors currently used in the electric bikes are mostly Hall rotational speed sensors, which are attached with magnet steel to the surface of rotating components of the electric bike such as a central axle or a flywheel, with a Hall element mounted on non-rotating components such as a frame spindle. When a person pedals a bike pedal, the central axle or flywheel rotates to produce changing potential corresponding to the torsional moment and outputs a corresponding voltage signal, which can control the output power of the motor after being amplified. However, this electric bike sensor has the following problems:
1. This electric bike sensor cannot detect static and dynamic torsional moment, and has poor measurement accuracy; it cannot be zero started in riding, and will encounter excessive electric power when running on a level road and downhill to make the battery discharge unnecessarily.
2. Because the magnet steel is not mounted in an effective stressed position of the central axle, the displacement produced due to the torsion is not obvious, usually obvious at a low rotational speed while not obvious at a high rotational speed, which makes output of an induced potential signal inaccurate, greatly reducing work stability and reliability of the sensor.

Document CN 201177539Y shows the preamble of claim 1.

### CONTENTS OF THE INVENTION

A purpose of the present invention is to provide an electric-bike central-axle torque speed sensing device with high sensing sensitivity and accuracy, so as to solve the above problems.

A technical solution of the present invention is as follows: The electric-bike central-axle torque speed sensing device comprises a central axle fitted in a five-way pipe, a left crank and a right crank secured on both ends of the central axle, and a chain wheel sleeved on the central axle; sleeved on the central axle is a torque pipe that will produce circumferential deformation when it is subjected to a circumferential torsional force, the torque pipe being secured at one end to the central axle and secured at the other end to the chain wheel; on the outer wall of the torque pipe is secured a circle of magnetic conductive alloy sheet clinging to this torque pipe, with the magnetic conductive alloy sheet provided densely with holes; the magnetic conductive alloy sheet is provided on its periphery with a coil used for detecting magnetic change, with the coil connected to a motor controller via a signal processor; inside the five-way pipe is also secured a speed-sensitive Hall connected to the signal processor, with the central axle provided with a speed-sensitive magnet steel corresponding to the speed-sensitive Hall.

Preferably, the signal processor is a signal processing circuit board (6) disposed in the five-way pipe.

Preferably, the speed-sensitive Hall is integrated on the signal processing circuit board.

Preferably, on the magnetic conductive alloy sheet are formed by the holes at least two or so annular hole distribution bands distributed symmetrically left and right, with the holes in each of the annular hole distribution bands all uniformly distributed at intervals along the circumferential direction of the magnetic conductive alloy sheet. The present invention has totally two annular hole distribution bands. According to the invention the holes are elongated holes. According to the invention the holes are inclined with respect to the longitudinal direction of the magnetic conductive alloy sheet.

Preferably, the angle between the longitudinal directions of the holes and the magnetic conductive alloy sheet is 45°.

Preferably, the five-way pipe is provided inside with a magnetic conductive sleeve covering the coil and a magnetic conductive gasket.

Preferably, the five-way pipe is provided inside with a positioning bushing, which is axially locked by pressing both ends of the five-way pipe into a left wrist guard and a right wrist guard, glue being used between the signal processing circuit board and the positioning bushing for sealing and securing, the coil being wound around the positioning bushing.

The present invention has the following advantages:
1. In the present invention, a torque signal can be obtained through a coil simply by applying a force to the central axle to get it twisted, and thus the static and dynamic torsional moment can be detected; compared to an existing Hall torque sensing device, the present invention has more stable and reliable work performance, and can also ensure that the electric bike can be zero started in running and keep stable running performance.
2. The present invention can detect the torque and speed signals of the central axle simultaneously, and control the output power of the motor synthetically according to the torque and speed signals, so as to make the operating mode of the motor closer to actual needs.
3. This torque speed sensing device of the present invention is provided with a signal processor, which can process the torque and speed signals and is disposed together with the central axle, and thus each of this sensing devices can be subjected to commissioning before leaving the factory. Because the sensing parameters of the respective products are all different and individualized, each of the sensing devices needs commissioning before leaving the factory, so as to ensure consistency and versatility of the products after they leave the factory. If the signal processor is not disposed together with the central axle, the torsion apparatus and the signal processor need to be mounted separately in the bike factory, which will result in difference among bikes and thus the bikes will have poor versatility and consistency. Mounting the signal processor on the central axle enables this speed torque sensing device to be sold as a complete set of products, which will thus have better consistency and versatility.

### BRIEF DESCRIPTION OF THE DRAWINGS

The present invention will be further described below with reference to drawings and examples.
Fig. 1 is a schematic diagram of the overall structure of this electric-bike central-axle torque speed sensing device of the example of the present invention.
Fig. 2 is a schematic diagram of the partial structure of this electric-bike central-axle torque speed sensing device of the example of the present invention.
Fig. 3 is another schematic diagram of the partial structure of this electric-bike central-axle torque speed sensing device of the example of the present invention.
Fig. 4 is an enlarged diagram of the portion A in Fig. 1.

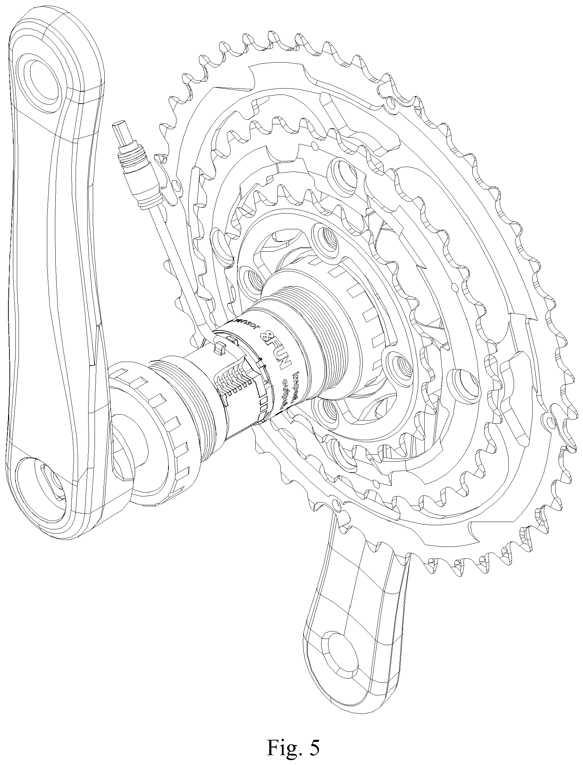

Fig. 5 is a schematic diagram of the three-dimensional structure of this electric-bike central-axle torque speed sensing device of the example of the present invention.
Wherein: 1. a left wrist guard; 2. a right wrist guard; 4. a central axle; 5. a torque pipe; 6. a signal processing circuit board; 7. a magnetic conductive sleeve; 8. a magnetic conductive gasket; 9. an outgoing line; 10. a positioning bushing; 11. a wire retainer; 12. a speed-sensitive steel magnet; 13. a left crank; 14. a right crank; 15. a bolt; 16. a chain wheel; 17. a hole; 18. a speed-sensitive Hall; 19. a coil; and 20. a magnetic conductive alloy sheet.

### DETAILED DESCRIPTION OF THE EMBODIMENTS

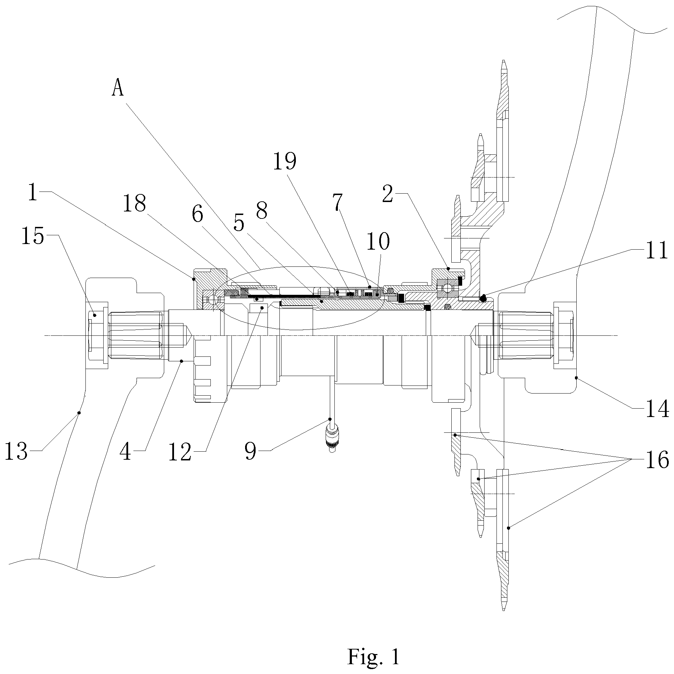

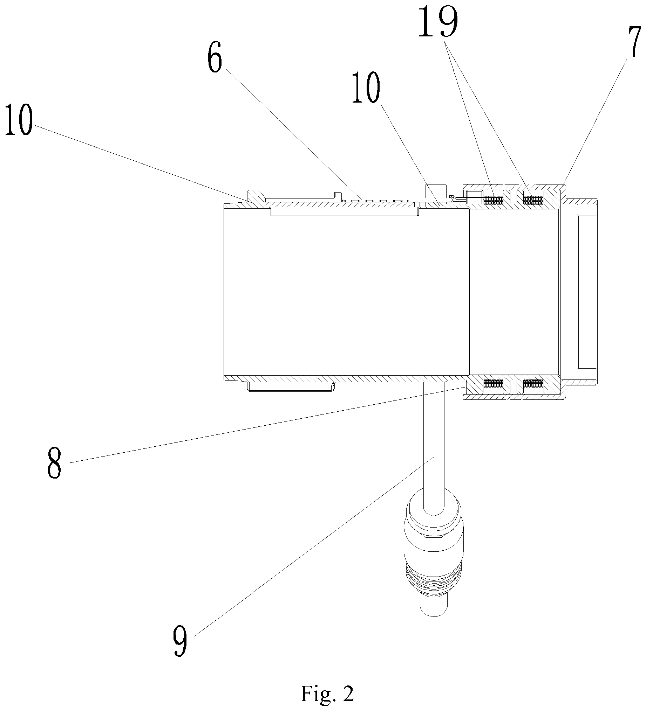

Figs. 1-4 show a specific example of this electric-bike central-axle torque speed sensing device of the present invention, which mainly comprises the following parts: a left wrist guard 1, a right wrist guard 2, a central axle 4, a torque pipe 5, a signal processing circuit board 6, a magnetic conductive alloy sheet, a magnetic conductive gasket 8, an outgoing line 9, a positioning bushing 10, a wire retainer 11, a speed-sensitive steel magnet 12, a left crank 13, a right crank 14, a bolt 15, a chain wheel 16, a magnetic conductive alloy sheet 17, and a speed-sensitive Hall 18.

To be the same with the conventional technology, while in assembly, the central axle 4 goes through the five-way pipe (not shown in the figures), with both ends of the central axle 4 secured and connected to the left crank 13 and the right crank 14, respectively through the bolt 15; sleeved on the central axle 4 is the chain wheel 16 located at the right side of the five-way pipe, which is provided on both ends with the left wrist guard 1 and the right wrist guard 2, respectively. To be the same with the conventional technology, the left and right cranks involved in this example are fitted with the electric-bike pedals in actual use, which are pedaled to rotate by a person. The key improvements of the present invention are as follows: Sleeved on the central axle 4 is a torque pipe 5 that will produce circumferential deformation when it is subjected to a circumferential torsional force, the torque pipe 5 being secured at one end to the central axle 4 and secured at the other end to the chain wheel 16; on the outer wall of the torque pipe 5 is secured a circle of magnetic conductive alloy sheet 20 clinging to this torque pipe, with the magnetic conductive alloy sheet 20 provided densely with holes 17; the magnetic conductive alloy sheet 20 is provided on its periphery with a coil 19 used for detecting magnetic change, with the coil connected to a motor controller via a signal processor; inside the five-way pipe is also secured a speed-sensitive Hall connected to the signal processor, with the central axle 4 provided with a speed-sensitive magnet steel corresponding to the speed-sensitive Hall.

Again as shown in Fig. 1, the work principle of this electric-bike central-axle torque speed sensing device in this example is briefly described as follows:
In riding the electric bike, a person pedals the pedal to drive the left and right cranks and the central axle 4 to rotate; the central axle 4 then transfers a torsion to the torque pipe 5, which then transfers the torsion to the chain wheel 16 to drive chain to rotate. In this process, the torque pipe 5 has circumferential deformation because of being subjected to a circumferential torsion, such that the magnetic conductive alloy sheet 20 secured to the torque pipe 5 will also have circumferential deformation, and the holes 17 on the magnetic conductive alloy sheet 20 will also be changed in shape and area, which then causes the magnetic field around the coil to change and makes the coil change in the electromotive force, thereby outputting a torque signal to the signal processor. Meanwhile, the speed-sensitive magnet steel 12 rotates with the central axle 4 to make the generated magnetic field change, with the magnetic field change speed signal of the speed-sensitive magnet steel 12 obtained by the speed-sensitive Hall 18 and transferred to the signal processor. The signal processor comprehensively processes the torque and speed signals it receives, and converts them to the corresponding electrical signals to output to the motor controller via an outgoing line 9; the motor control circuit board outputs the corresponding control signal according to the strength of the electrical signal transferred from the signal processor, and drives the motor of the electric bike to reduce or increase the running power to achieve a good powering effect and save energy.

The holes 17 on the magnetic conductive alloy sheet 20 have the function of enhancing deformability of the magnetic conductive alloy sheet 20, and also have the function of preventing structure damage of the magnetic conductive alloy sheet 20 due to frequent deformation.

In this example, the signal processor is a signal processing circuit board 6 disposed in the five-way pipe. Certainly, the signal processor can also use other structure forms of being located outside the five-way pipe. And the speed-sensitive Hall 18 is integrated directly on this signal processing circuit board 6.

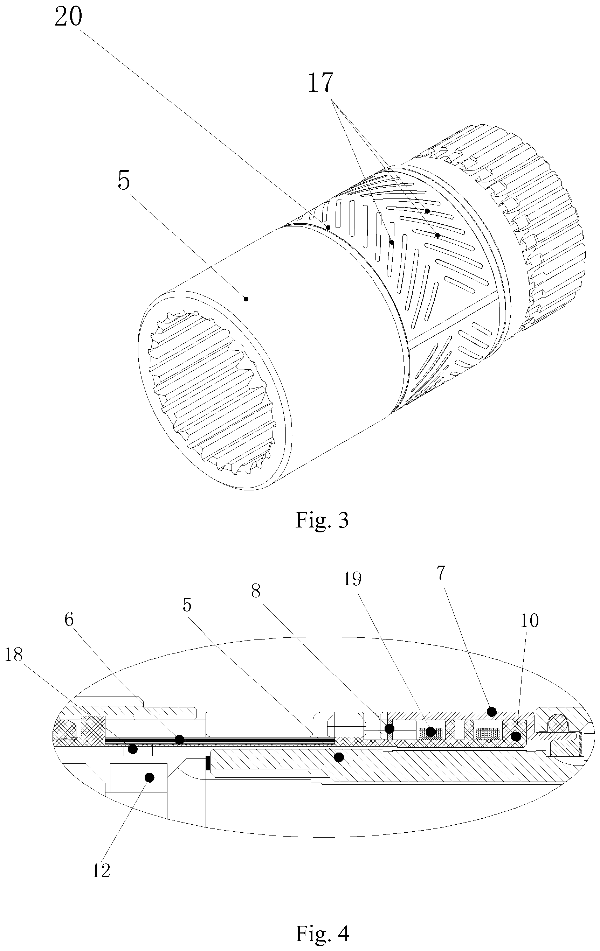

The holes 17 may be various types of holes, such as a round hole, a square hole and an oval hole, with an elongated hole used in this example. On the magnetic conductive alloy sheet 20 are formed by the holes 17 at least two or so (two in this example) annular hole distribution bands distributed symmetrically left and right (i.e., the hole distribution bands are annular, as shown in Fig. 3), with the holes 17 in each of the annular hole distribution bands all uniformly distributed at intervals along the circumferential direction of the magnetic conductive alloy sheet 20.

In this example, the holes 17 are inclined with respect to the longitudinal direction (i.e. the axial direction) of the magnetic conductive alloy sheet 20. The angle between (the longitudinal direction of) the holes 17 and the longitudinal direction of the magnetic conductive alloy sheet 20 is 45°. Because the holes are distributed symmetrically left and right, the above contents can be understood as follows: The angle between the longitudinal directions of the holes 17 at the left side and the magnetic conductive alloy sheet 20 is +45°, while the angle between the longitudinal directions of the holes 17 at the right side and the magnetic conductive alloy sheet 20 is -45°, as shown in Fig. 3.

The five-way pipe in this example is provided inside with a magnetic conductive sleeve 7 covering the coil 19 and a magnetic conductive gasket 8, with the magnetic conductive sleeve 7 and the magnetic conductive gasket 8 playing an role of magnetic shielding for the coil 19 so as to improve the magnetic interference resistance of the coil 19.

In this example the signal processing circuit board 6 and the coil 19 are specifically assembled as the follows: The five-way pipe is provided inside with a positioning bushing 10, which is axially locked by pressing both ends of the five-way pipe into a left wrist guard 1 and a right wrist guard 2, glue being used between the signal processing circuit board 6 and the positioning bushing 10 for sealing and securing, the coil 19 being wound around the positioning bushing 10.

Certainly, the above example is used only for explaining the technical concept and characteristics of the present invention. It is provided to make people understand the present invention and implement the same, rather than limit the scope of protection of the present invention.

## Claims

1. An electric-bike central-axle torque speed sensing device, comprising a central axle (4) fitted in a five-way pipe, a left crank (13) and a right crank (14) secured on both ends of the central axle (4), and a chain wheel (16) sleeved on the central axle (4), sleeved on the central axle (4) is a torque pipe (5) that will produce circumferential deformation when it is subjected to a circumferential torsional force, the torque pipe (5) being secured at one end to the central axle (4) and secured at the other end to the chain wheel (16); on the outer wall of the torque pipe (5) is secured a circle of magnetic conductive alloy sheet (20) clinging to this torque pipe, with the magnetic conductive alloy sheet (20) provided densely with holes (17); **characterized in that**: on the magnetic conductive alloy sheet (20) are formed by the holes (17) totally two annular hole distribution bands distributed symmetrically left and right, with the holes (17) in each of the annular hole distribution bands all uniformly distributed at intervals along the circumferential direction of the magnetic conductive alloy sheet (20), wherein the holes (17) are elongated holes and the holes (17) are inclined with respect to the longitudinal direction of the magnetic conductive alloy sheet (20); the magnetic conductive alloy sheet (20) is provided on its periphery with a coil (19) used for detecting magnetic change, with the coil (19) connected to a motor controller via a signal processor; inside the five-way pipe is also secured a speed-sensitive Hall (18) connected to the signal processor, with the central axle (4) provided with a speed-sensitive magnet steel (12) corresponding to the speed-sensitive Hall (18).

2. The electric-bike central-axle torque speed sensing device according to claim 1, **characterized in that**: the signal processor is a signal processing circuit board (6) disposed in the five-way pipe.

3. The electric-bike central-axle torque speed sensing device according to claim 2, **characterized in that**: the speed-sensitive Hall (18) is integrated on the signal processing circuit board (6).

4. The electric-bike central-axle torque speed sensing device according to claim 1, **characterized in that**: the angle between the longitudinal directions of the holes (17) and the magnetic conductive alloy sheet (20) is 45°.

5. The electric-bike central-axle torque speed sensing device according to claim 1, **characterized in that**: the five-way pipe is provided inside with a magnetic conductive sleeve (7) covering the coil (19) and a magnetic conductive gasket (8).

6. The electric-bike central-axle torque speed sensing device according to claim 2, **characterized in that**: the five-way pipe is provided inside with a positioning bushing (10), which is axially locked by pressing both ends of the five-way pipe into a left wrist guard (1) and a right wrist guard (2), glue being used between the signal processing circuit board (6) and the positioning bushing (10) for sealing and securing, the coil (19) being wound around the positioning bushing (10).

## Patentansprüche

1. Vorrichtung zur Erfassung der Drehzahl der Mittelachse eines Elektrofahrrads, umfassend eine Mittelachse (4), die in ein 5-Wege-Rohr eingepasst ist, eine linke Kurbel (13) und eine rechte Kurbel (14), die an beiden Enden der Mittelachse (4) befestigt sind, und ein Kettenrad (16), das auf die Mittelachse (4) aufgeschoben ist, wobei auf die Mittelachse (4) ein Drehmomentrohr (5) aufgeschoben ist, das eine Umfangsverformung erzeugt, wenn es einer in Umfangsrichtung wirkenden Torsionskraft ausgesetzt ist, wobei das Drehmomentrohr (5) an einem Ende an der Mittelachse (4) befestigt ist und and dem anderen Ende an dem Kettenrad (16) befestigt ist; wobei an der Außenwand des Drehmomentrohrs (5) ein Kreis aus magnetisch leitfähigem Legierungsblech (20) befestigt ist, das an diesem Drehmomentrohr haftet, wobei das magnetisch leitfähige Legierungsblech (20) dicht mit Löchern (17) versehen ist; **dadurch gekennzeichnet, dass**: an dem magnetisch leitfähigen Legierungsblech (20) durch die Löcher (17) insgesamt zwei ringförmige Lochverteilungsbänder ausgebildet sind, die symmetrisch links und rechts verteilt sind, wobei die Löcher (17) in jedem der ringförmigen Lochverteilungsbänder alle gleichmäßig in Abständen entlang der Umfangsrichtung des magnetisch leitfähigen Legierungsblechs (20) verteilt sind, wobei die Löcher (17) Langlöcher sind und die Löcher (17) in Bezug auf die Längsrichtung des magnetisch leitfähigen Legierungsblechs (20) schräg sind; das magnetisch leitfähige Legierungsblech (20) an seinem Rand mit einer Spule (19) versehen ist, die zur Erfassung einer magnetischen Änderung verwendet wird, wobei die Spule (19) über einen Signalprozessor mit einer Motorsteuerung verbunden ist; innerhalb des 5-Wege-Rohrs außerdem ein mit dem Signalprozessor verbundenes geschwindigkeitsempfindliches Hall-Element (18) befestigt ist, wobei die Mittelachse (4) mit einem geschwindigkeitsempfindlichen Magnetstahl (12) versehen ist, der dem geschwindigkeitsempfindlichen Hall-Element (18) entspricht.

2. Vorrichtung zur Erfassung der Drehzahl der Mittelachse eines Elektrofahrrads nach Anspruch 1, **dadurch gekennzeichnet, dass**: der Signalprozessor eine in dem 5-Wege-Rohr angeordnete Signalverarbeitungsplatine (6) ist.

3. Vorrichtung zur Erfassung der Drehzahl der Mittelachse eines Elektrofahrrads nach Anspruch 2, **dadurch gekennzeichnet, dass**: das geschwindigkeitsempfindliche Hall-Element (18) auf der Signalverarbeitungsplatine (6) integriert ist.

4. Vorrichtung zur Erfassung der Drehzahl der Mittelachse eines Elektrofahrrads nach Anspruch 1, **dadurch gekennzeichnet, dass**: der Winkel zwischen den Längsrichtungen der Löcher (17) und des magnetisch leitfähigen Legierungsblechs (20) 45 ° beträgt.

5. Vorrichtung zur Erfassung der Drehzahl der Mittelachse eines Elektrofahrrads nach Anspruch 1, **dadurch gekennzeichnet, dass**: das 5-Wege-Rohr innen mit einer magnetisch leitfähigen Hülse (7), die die Spule (19) bedeckt, und einer magnetisch leitfähigen Dichtung (8) versehen ist.

6. Vorrichtung zur Erfassung der Drehzahl der Mittelachse eines Elektrofahrrads nach Anspruch 2, **dadurch gekennzeichnet, dass**: das 5-Wege-Rohr innen mit einer Positionierbuchse (10) versehen ist, die durch Hineindrücken beider Enden des 5-Wege-Rohrs in einen linken Handgelenkschutz (1) und einen rechten Handgelenkschutz (2) axial arretiert wird, wobei zwischen der Signalverarbeitungsplatine (6) und der Positionierbuchse (10) Klebstoff zum Abdichten und Befestigen verwendet wird, wobei die Spule (19) um die Positionierbuchse (10) gewickelt ist.

## Revendications

1. Dispositif de détection de vitesse de couple d'axe central pour vélo électrique, comprenant un axe central (4) monté dans un tube à cinq directions, une manivelle de gauche (13) et une manivelle de droite (14) fixées sur les deux extrémités de l'axe central (4), et une roue à chaîne (16) emmanchée sur l'axe central (4), un tube de couple (5) étant emmanché sur l'axe central (4), lequel entraînera une déformation circonférentielle lorsqu'il est soumis à une force de torsion circonférentielle, le tube de couple (5) étant fixé, à une extrémité, à l'axe central (4), et fixé à l'autre extrémité à la roue à chaîne (16) ; un cercle de tôle en alliage conducteur magnétique (20), accroché à ce tube de couple, est fixé sur la paroi extérieure du tube de couple (5), avec la tôle d'alliage conducteur magnétique (20) munie d'une densité élevée de trous (17) ; **caractérisé en ce que**, au total, deux deux bandes de distribution de trous annulaires, distribués symétriquement à gauche et à droite, sont formées par les trous (17) sur la tôle d'alliage conducteur magnétique (20), avec les trous (17) dans chacune des bandes de distribution de trous annulaires tous uniformément distribués à intervalles le long de la direction circonférentielle de la tôle d'alliage conducteur magnétique (20), les trous (17) étant des trous allongés et les trous (17) étant inclinés par rapport à la direction longitudinale de la tôle d'alliage conducteur magnétique (20) ; **en ce que** la tôle d'alliage conducteur magnétique (20) est munie sur sa périphérie d'un bobine (19) utilisée pour détecter un changement magnétique, avec la bobine (19) connectée à un contrôleur de moteur via un processeur de signal ; un capteur à effet Hall sensible à la vitesse (18) est également fixé à l'intérieur du tube à cinq directions, connecté au processus de signal, avec l'axe central (4) muni d'une bobine magnétique sensible à la vitesse (12) correspondant au capteur à effet Hall sensible à la vitesse (18).

2. Dispositif de détection de vitesse de couple d'axe central pour vélo électrique selon la revendication 1, **caractérisé en ce que** : le processeur de signal est un circuit imprimé de traitement de signal (6) disposé dans le tube à cinq directions.

3. Dispositif de détection de vitesse de couple d'axe central pour vélo électrique selon la revendication 2, **caractérisé en ce que** : le capteur à effet Hall sensible à la vitesse (18) est intégré dans le circuit imprimé de traitement de signal (6).

4. Dispositif de détection de vitesse de couple d'axe central pour vélo électrique selon la revendication 1, **caractérisé en ce que** : l'angle entre les directions longitudinales des trous (17) et la tôle d'alliage conducteur magnétique (20) est de 45°.

5. Dispositif de détection de vitesse de couple d'axe central pour vélo électrique selon la revendication 1, **caractérisé en ce que** : le tube à cinq directions est muni à l'intérieur d'un manchon conducteur magnétique (7) couvrant la bobine (19) et d'un joint conducteur magnétique (8).

6. Dispositif de détection de vitesse de couple d'axe central pour vélo électrique selon la revendication 2, **caractérisé en ce que** : le tube à cinq directions est muni à l'intérieur d'une douille de positionnement (10), laquelle est verrouillée axialement en pressant les deux extrémités du tube à cinq directions dans une protection de poignet gauche (1) et une protection de poignet droite (2), de la colle étant utilisée entre le circuit imprimé de traitement de signal (6) et la douille de positionnement (10) pour l'étanchéité et la fixation, la bobine (19) étant enroulée autour de la douille de positionnement (10).
